# EUROPEAN PATENT SPECIFICATION

(11) **EP 3 836 744 B1**
(45) Date of publication and mention of the grant of the patent: **05.03.2025**
(21) Application number: 20207584.2
(22) Date of filing: 25.01.2018
(51) Int. Cl.: H04W 88/08

(54) **CELLULAR COMMUNICATION SYSTEM**
ZELLULARES KOMMUNIKATIONSSYSTEM
SYSTÈME DE COMMUNICATION CELLULAIRE

(43) Date of publication of application: 16.06.2021
(62) Divisional of application: 18153383.7
(73) Proprietor: SOLiD Inc., Seongnam-si, Gyeonggi-do (KR)
(72) Inventor: CHO, Young Man, Seoul (KR); KWAK, Hee Hwan, Gyeonggi-do (KR)
(74) Representative: Grünecker Patent- und Rechtsanwälte PartG mbB

(56) References cited:
- WO-A1-2015/063758
- KR-A- 20160 030 523
- US-A1- 2016 135 175
- US-B2- 9 042 732

## Description

### BACKGROUND

### 1. Field

The following description relates to a cellular communication technology, and more particularly, to a distributed antenna system (DAS) having a set of small cells as a source.

### 2. Description of Related Art

In mobile communications, wireless coverage is dependent, to large extent, on a base transceiver station (BTS). Due to high costs of installing BTSs, there has been an attempt to expand wireless coverage through a remote radio head (RRH) device. The RRH device is connected with a BTS via a fiber optic cable using common public radio interface (CPRI) protocols.

Further, a distributed antenna system (DAS) may be introduced in order to enhance in-building coverage. U.S. Patent No. 9,042,732 discloses an example of the DAS.

A typical analog DAS includes a headend unit and remote units. The headend unit is connected to BTSs or RRH devices via coaxial cables, converts radio frequency (RF) signal inputs from the connected BTSs or RRH devices into optical RF signals, and outputs the optical RF signals, and the remote units are connected to the headend unit via optical fibers and distribute downlink optical RF signals to wireless terminals.

Such an analog DAS is difficult to reconfigure once it has been deployed, and cannot scale dynamically to a required service capacity.

Meanwhile, as mobile communication technology evolves into long term evolution (LTE)-Advanced, a small cell technology emerges as one approach to maximize usage efficiency within limited resources. Small cells are low-powered wireless access BTSs, which are each defined as having an operational range from at least 10 meters to a few hundred meters. Small cells are classified as femtocells, picocells, metrocells, and microcells according to their usage range and purpose of use. In addition, the classification of small cells may be made according to an installation site and purpose of service, and small cells for home, enterprise, urban areas, and rural areas may exist.

US 2016135175 discloses a system for managing a small cell telecommunication system servicing multiple network operators. The management sub-system disclosed in US 2016135175 encompasses a controller, multiple baseband units and a transport module. Each of the baseband units includes one processor, I/Q modules, PHY modules and MAC modules. The output of the baseband units is connected to a transport module encompassing several mixers, which combine the I and Q components of the complex digital signal, a combining module and a backplane. The backplane routes the signal to one or more of the remote antenna units.

It is the object of the present mention to provide an adaptable small cell signal source for use in a cellular communication system. This object is solved by the subject matter of independent claim 1. Preferred embodiments are the subject matter of the dependent claims.

The following description relates to a cellular communication system, which uses an analog distributed antenna system (DAS) that is readily reconfigurable according to a required service capacity.

The following description relates to a cellular communication system, which uses an analog DAS whose capacity is scalable according to a required service capacity.

The following description relates to a cellular communication system, which uses an analog DAS that is readily reconfigurable according to a required service capacity while minimizing addition of hardware devices or components at the customer sites.

Other features and aspects will be apparent from the following detailed description, the drawings, and the claims.

### BRIEF DESCRIPTION OF THE DRAWINGS

FIG. 1 is a diagram illustrating an example of an analog distributed antenna system (DAS).
FIG. 2 is a block diagram illustrating an example of a configuration of a remote optical unit of FIG. 1.
FIG. 3 is a block diagram illustrating a configuration of a cellular communication system according to one exemplary aspect.
FIG. 4 is a block diagram illustrating a configuration of a cellular communication system according to another exemplary aspect.
FIG. 5 is a block diagram illustrating a configuration of a cellular communication system according to still another exemplary aspect.
FIGS. 6 to 8 are block diagrams illustrating aspects of a configuration of a lower small cell unit in the exemplary aspect shown in FIG. 3 or 5.
FIGS. 9 to 11 are block diagrams illustrating aspects of a remote optical unit in the exemplary aspects shown in FIGS. 3 to 5.
FIG. 12 is a diagram for describing a first operation mode of a cellular communication system according to one exemplary aspect.
FIG. 13 is a diagram for describing a second operation mode of a cellular communication system according to one exemplary aspect.
FIG. 14 is a diagram for describing a third operation mode of the cellular communication system in accordance with the exemplary aspect shown in FIG. 4 or 5.
FIG. 15 is a diagram illustrating another example of cellular communication system that implements the second operation mode described with reference to FIG. 13.
FIG. 16 is a diagram for describing a fifth operation mode of the cellular communication system in accordance with the exemplary aspect illustrated in FIG. 3 or 5.
FIG. 17 is a diagram for describing a sixth operation mode of the cellular communication system in accordance with the exemplary aspect illustrated in FIG. 3 or 5.
FIG. 18 is a diagram for describing a seventh operation mode of the cellular communication system in accordance with the exemplary aspect illustrated in FIG. 3 or 5.

Throughout the drawings and the detailed description, the same drawing reference numerals should be understood as referring to the same elements, features, and structures unless otherwise described. The relative size and depiction of these elements may be exaggerated for clarity, illustration, and convenience.

### DETAILED DESCRIPTION

The following description is provided to assist the reader in gaining a comprehensive understanding of the methods, apparatuses, and/or systems described herein. Also, although configurations of selectively described aspects or selectively described aspects in below are illustrated as a single integrated configuration in the drawings, it should be understood that these configurations may be freely combined with each other as long as a technological contradiction of such a combination is not apparent for those skilled in the art unless otherwise described. It should also be noted that each block of the block diagrams may represent a physical element, and in some cases, may represent part of a function of one physical element or a logical representation of a function over a number of physical elements. A block or a portion of a block may sometimes be a set of program instructions. All or some of the blocks may be implemented by hardware, software, or a combination thereof.

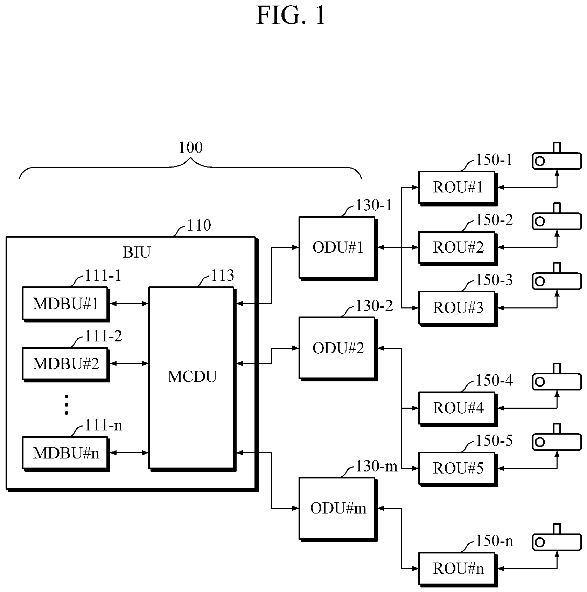

FIG. 1 is a diagram illustrating an example of an analog distributed antenna system (DAS) to which the present invention is applicable. As shown in FIG. 1, the analog DAS includes a headend unit 100 and a plurality of remote units 150. In the illustrated example, the remote units are represented as remote optical units 150. The headend unit 100 and the plurality of remote optical units 150 are connected via optical cables. The term "remote unit" indicates that the headend unit may be connected to the plurality of remote optical units 150 via coaxial cables or other analog cables instead of the optical cables. The headend unit 100 mixes and converts a plurality of radio frequency (RF) signals from a plurality of base transceiver stations (BTSs) into an optical RF signal. Each of the remote optical units 150 is disposed at each site, converts the optical RF signal received from the headend unit into an electrical RF signal, and transmits the electrical RF signal to the antenna. A description regarding a downlink signal may be applied to an uplink signal in a symmetrical manner.

For example, the headend unit 100 includes a base station interface unit (BIU) 110 and an optical distribution unit (ODU) 130. The BIU 110 includes a plurality of base-station signal driving units 111, which receive a signal of each band from a BTS, up/down convert the band of the signal if necessary, and output the resultant signal, and a combine-divider 113, which mixes RF signals input from the plurality of base-station signal driving units and output a resultant signal. In the drawing, according to the names used in an applicant's commercialized system, the base-station signal driving unit is denoted as a main driver BTS unit (MDBU) and the combine-divider 113 is denoted as a main combiner/divider unit (MCDU). In the present exemplary aspect, the base-station signal driving units 111 are connected to an output of BTS equipment of each mobile communication service operator via coaxial cables. However, the present invention is not limited to the above, and the base-station signal driving units 111 may also be connected via optical cables. The base-station driving units 111 may deal with different frequency bands or different signal specifications according to specifications of a mobile communication service operator or specifications of BTS equipment. The combine-divider 113 has a plurality of outputs, through each of which a mixture of the RF signals output from the base-station signal driving units 111 is output according to needs of the remote optical units 150.

The ODU 130 converts the RF signal output from the combine-divider 113 into an optical RF signal, and distributes and outputs the optical RF signal through a plurality of output ports.

The remote optical unit 150 receives the optical RF signals from the ODU 130. Each output port of the ODU 130 may be connected with the remote optical unit 150. For example, in FIG. 1, an ODU 130-1 is connected with remote optical units 150-1, 150-2, and 150-3. Also, an ODU 130-2 is connected with remote optical units 150-4 and 150-5.

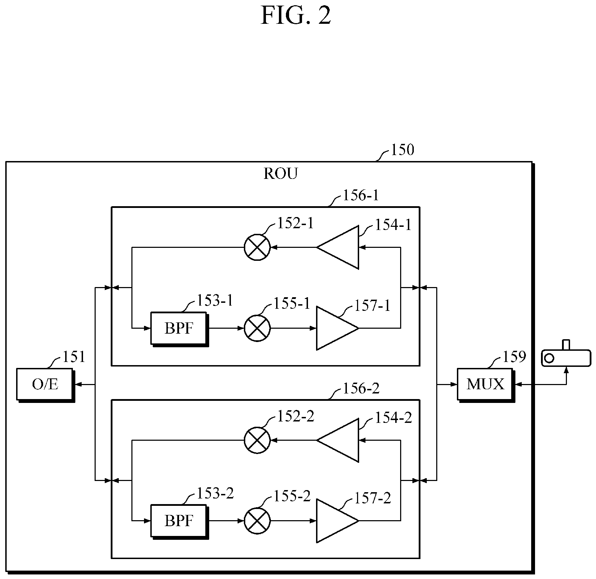

FIG. 2 is a block diagram illustrating an example of a configuration of a remote optical unit of FIG. 1. In one exemplary aspect, the remote optical unit 150 includes three types of modules which are a photoelectric conversion unit 151 configured to convert the optical RF signals received from the ODU 130 into electrical RF signals, a plurality of remote drive units (RDUs) 156-1 and 156-2, and a combine unit configured to combine signals generated from the RDUs. In one exemplary aspect, the remote optical units 150 may include the plurality of RDUs.

Each of the RDUs 156-1 and 156-2 includes a bandpass filter 153 which filters only a required band in an RF signal on a downlink path, a modulation/demodulation unit 155 which up/down converts a band of the filtered RF signal when necessary and outputs a resultant signal, and a power amplifier 157. Each of the RDUs 156-1 and 156-2 includes a low noise amplifier 154 which amplifies a signal from an antenna on an uplink path and a modulation/demodulation unit 152 which up/down converts a band of output from the low noise amplifier 154 and outputs a resultant signal when necessary. A plurality of RF signals of different bands may be multiplexed and transmitted through a single optical fiber.

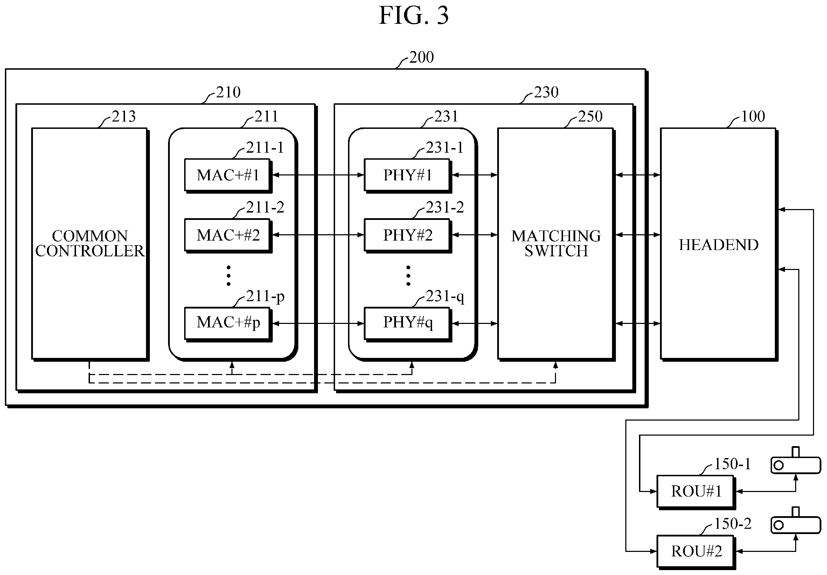

FIG. 3 is a block diagram illustrating a configuration of a cellular communication system according to one exemplary aspect. As illustrated in FIG. 3, the cellular communication system includes equipment for a small cell signal source 200, a headend unit 100, and remote units 150-1 and 150-2. The small cell signal source 200 includes an upper small cell unit 210 and a lower small cell unit 230. The upper small cell unit 210 includes a plurality of upper protocol processors 211. Each upper protocol processor 211 processes a first part of a protocol stack of a small cell from an uppermost protocol of the protocol stack of the small cell.

The lower small cell unit 230 includes a plurality of lower protocol processors 231. Each lower protocol processor 231 processes a remaining second part of the protocol stack of the small cell.

According to one aspect, the first part processed by the upper protocol processor 211 may be a media access control (MAC) layer and/or higher in the protocol stack of the small cell. In this case, the remaining second part processed by the lower protocol processor may be a physical (PHY) layer in the protocol stack of the small cell. Such function splitting is possible on various levels.

In regard to long term evolution (LTE) radio interface protocols, a number of technical materials have been available, for example, there is the article entitled "Overview of LTE Radio Interface and Radio Network Architecture for High Speed, High Capacity and Low Latency" which was published on pages 10-19 in NTT TOCOMO Technical Journal Vol.13 No.1. As described in the article, the LTE radio interface protocols may be classified as radio resource control (RRC), packet data convergence protocol (PDCP), radio link control (RLC), MAC, and PHY layer protocols. Among PDCP, RLC, and MAC layers that correspond to a second layer in seven layers of open system interconnection (OSI), the PDCP layer receives an RRC packet and processes header compression, a cipher of an RRC message, and integrity protection. The RLC layer segments and concatenates protocol data unit (PDU) packets from the PDCP layer to generate an RLC PDU with an appropriate packet size. In particular, the RLC layer performs automatic repeat request (ARQ) control according to a response from a receiving side. The MAC layer performs scheduling of shared channel resources. Also, the MAC layer processes a hybrid ARQ (HARQ). The PHY layer performs cell search and channel-dependent scheduling in a frequency domain, and performs a random access procedure when making a call.

Although the illustrated aspect is described as an example of an LTE system, the present invention is not limited thereto and can be applied to general mobile communication technologies or a combination thereof, as is typical for a DAS.

Virtualization technique of a radio access network (RAN), which has been recently discussed in the Small Cell Forum (http://www.smallcellforum.org), may be considered as a reference technique, although it is not directly related to the present invention. According to this technique, some upper layers among RAN layers for mobile communication are virtualized and implemented in cloud space in a software manner, and the remaining layers are implemented as physical network functions. In this forum, the discussion on "function splitting" is in progress regarding which layers are to be virtualized and which layers are to be implemented as physical network functions among the RAN layers. According to the ongoing discussion, because splitting is performed on higher layers, transport costs are advantageously reduced, while RF gains are also reduced. Important factors for considering function splitting in RAN virtualization which can secure smooth communications between virtualized functional blocks and physical lower layer functional blocks include bandwidth and latency. According to the materials disclosed by the Small Cell Forum, function splitting between a MAC layer and a PHY layer may provide a trade-off in terms of bandwidth and latency.

Referring back to FIG. 3, the small cell signal source 200 of the cellular communication system in accordance with the exemplary aspect includes a first matching switch 250 and a common controller 213. The first matching switch 250 respectively matches lower protocol processors to the plurality of remote units 150 connected to the BIU by switching on or off an output path of each of the lower protocol processors. According to a required service capacity, the common controller 213 activates a plurality of upper protocol processors of the upper small cell unit and a plurality of lower protocol processors of the lower small cell unit, and accordingly, controls an operation of the first matching switch 250.

In one exemplary aspect, the upper protocol processors 211 may be implemented in a software manner, as well as in a circuitry manner. For example, each of the upper protocol processors 211 may be programmed in a general programming language (e.g., C/C++ language, etc.), then be compiled and executed as a task or a process on a central processing unit (CPU). In one exemplary aspect, the lower protocol processors 231 may be implemented in a circuit manner. For example, each of the lower protocol processors 231 may be implemented in the form of a gate array or firmware.

According to one aspect, a plurality of upper protocol processors 211-1 to 211-p of the upper small cell unit 210 may be implemented as software tasks whose execution is controlled by the common controller 213. Similarly, a plurality of lower protocol processors 231-1 to 231-q of the lower small cell unit 230 may be implemented as software tasks whose execution is controlled by the common controller 213. As is already known, since the upper protocol processors 211-1 to 211-p are implemented as software tasks, they do not physically or logically reside within the upper small cell unit 210, and no corresponding program modules exist on a program code. Rather, the upper protocol processors may be considered as entities which are newly generated and executed on memory under the control of a scheduler. Although, due to the technical difficulty in representation, it is stated that the small cell unit includes a plurality of upper protocol processors, such statement or similar expressions are intended to be construed to imply a case in which the plurality of upper protocol processors are implemented as software tasks, as well as a case in which the upper protocol processors are implemented physically, that is, as circuitry, in the upper small cell unit.

In another exemplary aspect, some of logical modules of the upper protocol processor 211 may be implemented in a circuit manner. For example, a part of each of the upper protocol processors 211 may be implemented in the form of a gate array or firmware, and the remaining part may be implemented as a software task. Similarly, in one exemplary aspect, some of logical modules of the lower protocol processor 231 may be implemented in a circuit manner. For example, a part of each of the lower protocol processor 231 may be implemented in the form of a gate array or firmware, and the remaining part may be implemented as a software task.

In another exemplary aspect, the upper protocol processor 211 may be implemented as a software task, and the lower protocol processors 231-1 to 231-q may be implemented in a circuit manner.

In this case, the common controller 213 schedules execution of shared resources of the upper small cell unit 210. According to another aspect, the common controller 213 may be implemented as one of components included in the upper small cell unit. In the illustrated exemplary aspect, the small cell is an LTE small cell, and, for example, the common controller may be implemented as a function of a scheduler that processes scheduling of shared channel resources in the MAC layer. Additionally, the common controller 213 operates to mitigate interference which may occur when a plurality of PHY layers transmit different RF signals using the same frequency in a multi-cell or multi-sector environment.

The first matching switch 250 may be a physical switch that switches on or off output, or may be implemented as a software input/output interface for using an output of a program module as input or a program code, such as an input/output command. In the illustrated exemplary aspect, the first matching switch 250 is included in the lower small cell unit 230, but it is not limited thereto and may be configured as a separate device.

In the illustrated exemplary aspect, the first matching switch 250 connects an output of each of the lower protocol processors 231 to a plurality of headend units 100 by switching on or off an output path of each of the lower protocol processors 231.

According to one aspect, when the number of users increases in a region where a DAS provides services, that is, in a service region, the common controller 213 additionally activates the upper protocol processor 211 of the upper small cell unit.

According to another aspect, when additional bandwidth or capacity is required due to an increase in the use of the frequency band by users in a region where the DAS provides services, i.e., in a service region, the common controller 213 additionally activates the lower protocol processor 231 of the lower small cell unit 230. The common controller 213 controls the first matching switch 250 to connect the activated lower protocol processor 231 to the remote unit that needs additional capacity.

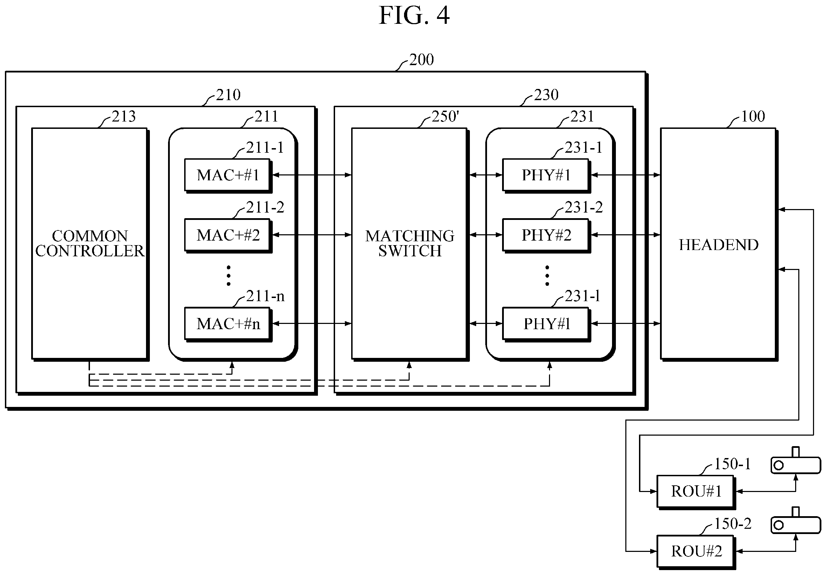

FIG. 4 is a block diagram illustrating a configuration of a cellular communication system according to another exemplary aspect. As illustrated in FIG. 4, the cellular communication system includes a small cell signal source 200, a headend unit 100, and a plurality of remote units 150-1 and 150-2. The small cell signal source 200 includes an upper small cell unit 210, a lower small cell unit 230, and a second matching switch 250'. The upper small cell unit 210 includes a plurality of upper protocol processors 211-1 to 211-n that process an upper first part of a protocol stack of a small cell. The lower small cell unit 230 includes a plurality of lower protocol processors 231-1, 231-2, and 231-I that process a remaining second part of the protocol stack of the small cell.

The second matching switch 250' switches on or off connections between each lower protocol processor of the lower small cell unit and each upper protocol processor of the upper small cell unit. The second matching switch 250' may be a physical switch that switches on or off output, or may be implemented as a software input/output interface for using an output of a program module as input, or a program code such as an input/output command. Since configurations corresponding to those of FIG. 4 are similar to those in FIG. 3, detailed descriptions thereof are omitted.

According to one aspect, when the number of users increases in a region where a DAS system provides services, i.e., in a service region, the common controller 213 additionally activates the upper protocol processor 211 of the upper small cell unit and the lower protocol processor 231 of the lower small cell unit, and in turn, controls an operation of the second matching switch 250'.According to another aspect, when additional bandwidth or capacity is required due to an increase in the use of the frequency band by users in a region where a DAS system provides services, i.e., in a service region, the common controller 213 additionally activates the lower protocol processor 231 of the lower small cell unit 230

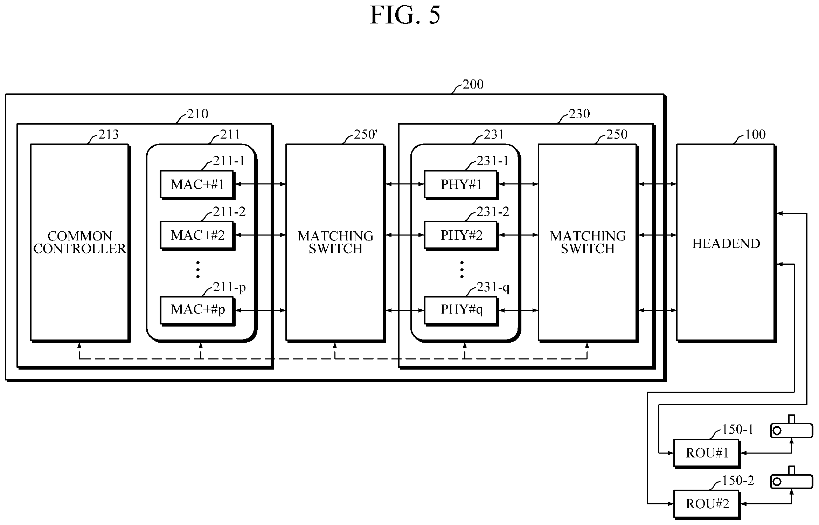

FIG. 5 is a block diagram illustrating a configuration of a cellular communication system according to still another exemplary aspect. As illustrated in FIG. 5, the cellular communication system includes a small cell signal source 200, a headend unit 100, and a plurality of remote units 150-1 and 150-2. The small cell signal source 200 includes an upper small cell unit 210, a lower small cell unit 230, a first matching switch 250, and a second matching switch 250'. The upper small cell unit 210 includes a plurality of upper protocol processors 211-1 to 211-n that process an upper first part of a protocol stack of a small cell. The lower small cell unit 230 includes a plurality of lower protocol processors 231-1, 231-2, and 231-I that process a remaining second part of the protocol stack of the small cell.

The first matching switch 250 switches on or off an output path of each lower protocol processor. The second matching switch 250' switches on or off a connection between each lower protocol processor of the lower small cell unit and each upper protocol processor of the upper small cell unit. Each of the first matching switch 250 and the second matching switch 250' may be a physical switch which switches on or off output, or may be implemented as a software input/output interface for using an output of a program module as input, or a program code such as an input/output command. Since configurations corresponding to those of FIG. 5 are similar to those in FIG. 3, detailed descriptions thereof will be omitted.

According to one aspect, when the number of users increases in a region where a DAS system provides services, that is, in a service region, the common controller 213 additionally activates the upper protocol processor 211 of the upper small cell unit and the lower protocol processor 231 of the lower small cell unit, and in turn, controls an operation of the second matching switch 250'.

According to another aspect, when additional bandwidth or capacity is required due to an increase in the use of the frequency band by users in a region where a DAS system provides services, i.e., in a service region, the common controller 213 additionally activates the lower protocol processor 231 of the lower small cell unit 230, and in turn, controls an operation of the first matching switch 250. Thus, a plurality of lower protocol processors 231 may be connected to a single upper protocol processor 211.

As should be apparent from the exemplary aspects illustrated, one or both of the first matching switch 250 and the second matching switch 250' may be provided.

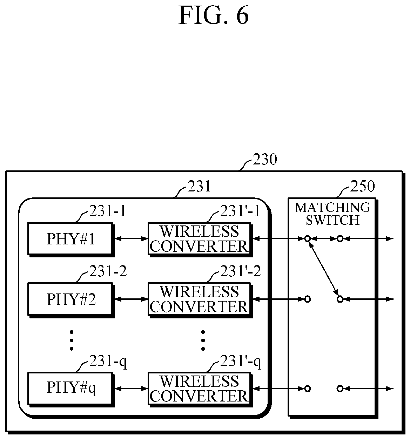

FIG. 6 is a block diagram illustrating one aspect of a configuration of the lower small cell unit 230 in the exemplary aspect shown in FIG. 3 or 5. According to one aspect, in the lower small cell unit 230, the lower protocol processor 231 includes wireless converters 231'-1 to 231'-q. In the present aspect, an output from the small cell is an RF signal, and the first matching switch 250 switches the RF signal from the lower protocol processor 231.

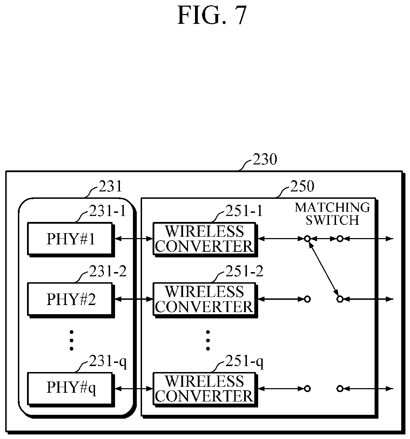

FIG. 7 is a block diagram illustrating another aspect of a configuration of the lower small cell unit 230 in the exemplary aspect shown in FIG. 3 or 5. As shown in FIG. 7, the first matching switch includes wireless converters 251-1 to 251-q at a receiving side. The small cell outputs a digital signal, for example, an LTE IQ signal, and the first matching switch 250 converts the IQ signal into an RF signal by modulating the IQ signal in the receiving side, and then transmits the RF signal to the remote optical unit which matches the small cell.

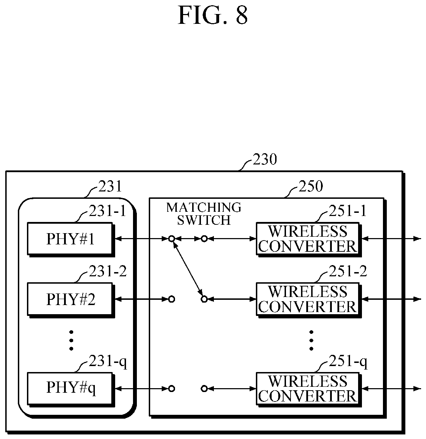

FIG. 8 is a block diagram illustrating still another aspect of a configuration of the lower small cell unit 230 in the exemplary aspect shown in FIG. 3 or 5. As shown in FIG. 8, the first matching switch 250 includes the wireless converters 251-1 to 251-q at an output side. The small cell outputs a digital signal, for example, an LTE IQ signal, and the first matching switch 250 respectively connects the small cells to the remote optical units so that outputs of the small cells respectively match the remote optical units, and then the first matching switch 250 converts the IQ signal into an RF signal by modulating the IQ signal, and outputs the RF signal.

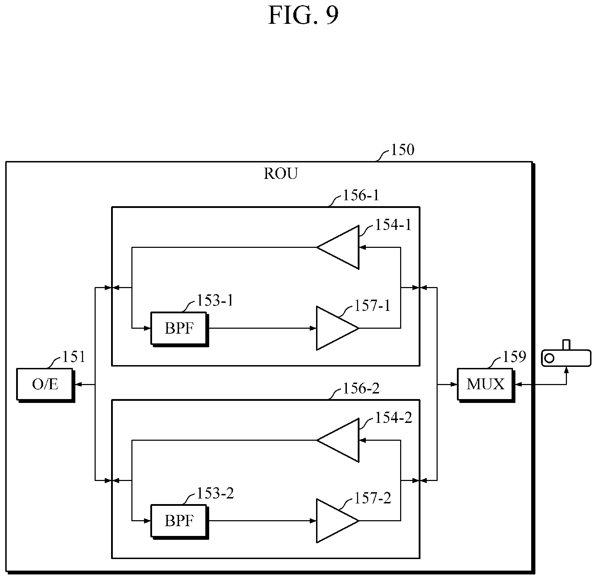

FIG. 9 is a block diagram illustrating one aspect of a configuration of the remote optical units 150-1 and 150-2 in the exemplary aspects shown in FIGs. 3 to 5. Referring to FIG. 9, the remote optical unit 150 includes three types of modules which are the photoelectric conversion unit 151 configured to convert optical RF signals received from ODUs 130 into electrical RF signals, the plurality of RDUs 156-1 and 156-2, and a combine unit 159 configured to combine signals generated from the RDUs. In one exemplary aspect, the remote optical unit 150 may include the plurality of RDUs 156-1 and 156-2. The RDUs may have different configurations from each other.

The RDU 156-1 includes a bandpass filter 153-1 which filters only a required band in an RF signal on a downlink path, and a power amplifier 157-1 which amplifies the filtered RF signal. The RDU 156-1 includes a low noise amplifier 154-1 which amplifies a signal from an antenna on an uplink path.

The RDU 156-2 includes a bandpass filter 153-2 which filters only a required band in the RF signal on the downlink path, and a power amplifier 157-2 which amplifies the filtered RF signal. The RDU 156-2 includes a low noise amplifier 154-2 which amplifies the signal from the antenna on the uplink path. Outputs from the two RDUs 156-1 and 156-2 are combined by the combine unit 159 and are transmitted to a single antenna.

In this case, the bandpass filter 153-1 of the RDU 156-1 and the bandpass filter 153-2 of the RDU 156-2 may have different pass bands. A plurality of RF signals with different bands may be multiplexed and transmitted through a single optical fiber.

In the illustrated exemplary aspects, the remote optical unit 150 may have a suitable configuration capable of transmitting RF signals of two different bands which are output from the headend unit 100.

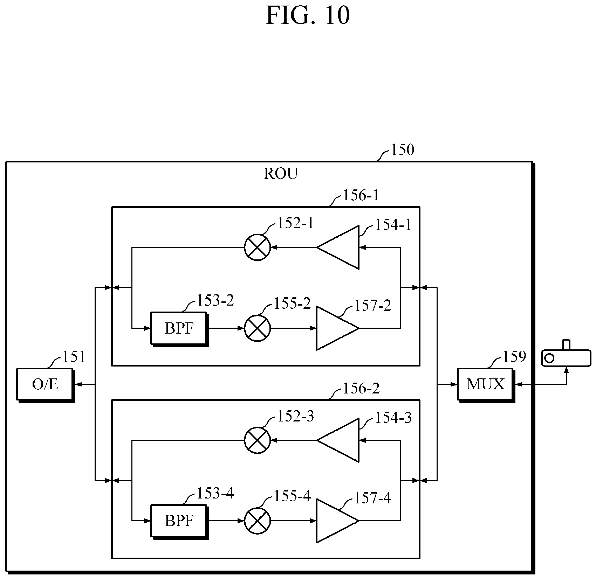

FIG. 10 is a block diagram illustrating another aspect of a configuration of the remote optical units 150-1 and 150-2 in the exemplary aspects shown in FIGS. 3 to 5. Referring to FIG. 10, the remote optical unit 150 includes three types of modules which are the photoelectric conversion unit 151 configured to convert the optical RF signals received from the ODUs 130 into electrical RF signals, the plurality of RDUs 156-1 and 156-2, and the combine unit 159 configured to combine signals generated from the RDUs. In the exemplary aspect, the remote optical unit 150 may include the plurality of RDU modules 156-1 and 156-2. The RDUs may have different configurations from each other.

The RDU 156-1 includes the bandpass filter 153-2 which filters only a required band in an RF signal on a downlink path, a demodulation unit 155-2 which demodulates the filtered RF signal by converting a band of the signal when necessary, and the power amplifier 157-2 which amplifies the demodulated signal. The RDU 156-1 includes the low noise amplifier 154-1 which amplifies a signal from an antenna on an uplink path, and a modulation unit 152-1 which modulates the amplified signal by converting a band of the signal when necessary.

The RDU 156-2 includes a bandpass filter 153-4 which filters only a required band in the RF signal on the downlink path, a demodulation unit 155-4 which demodulates the filtered RF signal by converting a band of the signal when necessary, and a power amplifier 157-4 which amplifies the demodulated signal. The RDU 156-2 includes a low noise amplifier 154-3 which amplifies the signal from the antenna on the uplink path and a modulation unit 152-3 which modulates the amplified signal by converting a band of the signal when necessary. The modulated signal outputs from the two RDUs 156-1 and 156-2 are in different bands.

According to one aspect, the headend unit may modulate RF signals of the same bands and transmit the modulated signals in order to increase coverage or capacity. These RF signals of different bands are transmitted through different remote optical units. Outputs of the two RDUs 156-1 and 156-2 having different frequencies are combined by the combine unit 159 and are transmitted to a single antenna.

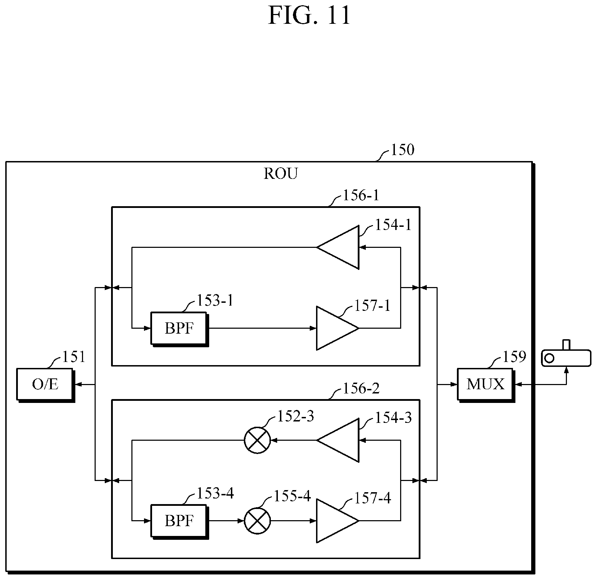

FIG. 11 is a block diagram illustrating still another aspect of a configuration of the remote optical units 150-1 and 150-2 in the exemplary aspects shown in FIGS. 3 to 5. Referring to FIG. 11, the remote optical unit 150 includes three types of modules which are the photoelectric conversion unit 151 configured to convert the optical RF signals received from the ODUs 130 into electrical RF signals, the plurality of RDUs 156-1 and 156-2, and the combine unit 159 configured to combine signals generated from the RDUs. In one exemplary aspect, the remote optical unit 150 may include the plurality of RDU modules 156-1 and 156-2. The RDUs may have different configurations from each other.

The RDU 156-1 includes the bandpass filter 153-1 which filters only a required band in an RF signal on a downlink path, and the power amplifier 157-1 which amplifies the filtered RF signal. The RDU 156-1 includes the low noise amplifier 154-1 which amplifies a signal from an antenna on an uplink path.

The RDU 156-2 includes the bandpass filter 153-4 which filters only a required band in the RF signal on the downlink path, the demodulation unit 155-4 which demodulates the filtered RF signal by converting a band of the signal when necessary, and the power amplifier 157-4 which amplifies the demodulated signal. The RDU 156-2 includes the low noise amplifier 154-3 which amplifies the signal from the antenna on the uplink path, and the modulation unit 152-3 which modulates the amplified signal by converting a band of the signal when necessary. Outputs of the two RDUs 156-1 and 156-2 are combined by the combine unit 159 and are transmitted to a single antenna.

In the illustrated exemplary aspect, since the RDU 156-1 does not include a modulation/demodulation unit, the RDU 156-1 performs bandpass filtering on the RF signal output from the headend unit 100, then amplifies the filtered signal and outputs the amplified signal. The RDU 156-2 extracts an RF signal of a specific frequency band using the bandpass filter 153-4, demodulates the extracted RF signal through band-down conversion using the modulation/demodulation unit 155-4, and outputs a resulting signal.

In the exemplary aspects illustrated in FIGS. 3 to 5, scalability of the small cell is addressed from two perspectives. One is the number of users, and the other is bandwidth, i.e., total throughput. The proposed invention can improve both the number of users and the bandwidth/throughput. According to one aspect, the common controller 213 may additionally activate the upper protocol processor 211 in the upper small cell unit 210, thereby increasing the number of users that can be supported. According to another aspect, the common controller 213 may allocate more computational resources, for example, memory or CPU resources, to the upper protocol processor 211 being executed in the upper small cell unit 210, thereby enabling the increase of the number of users.

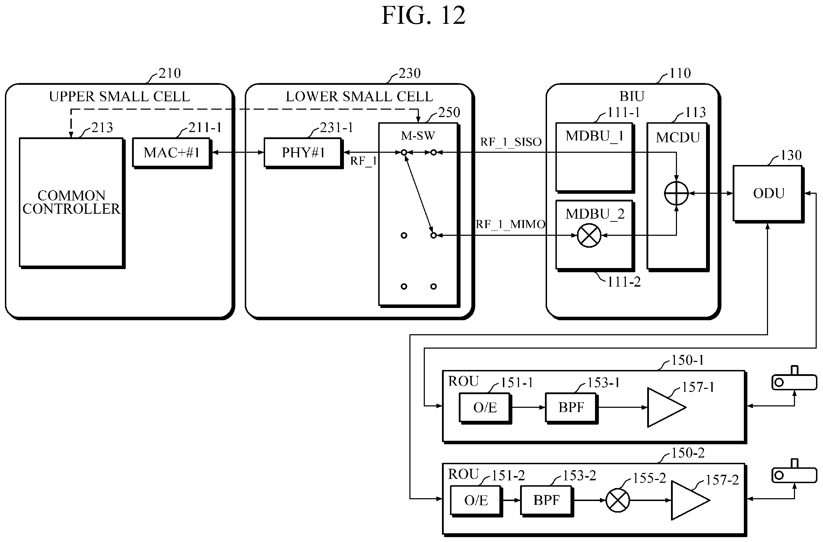

According to still another aspect, the common controller 213 may additionally activate the lower protocol processor 231 being executed in the lower small cell unit 230, thereby increasing the bandwidth that can be supported. According to yet another aspect, the common controller 213 may allocate more computational resources, for example, memory or CPU resources, to the lower protocol processor 231 being executed in the lower small cell unit 230, thereby enabling the increase of the bandwidth. In this case, the common controller 213 may need to appropriately control the first matching switch 250 or the second matching switch 250 in the lower small cell unit 230. Hereinafter, the above-described aspects will be described in detail with reference to FIGS. 12 to 16.

FIG. 12 is a diagram for describing a first operation mode of a cellular communication system in accordance with the exemplary aspect shown in FIG. 3. In the illustrated first operation mode, only one upper protocol processor 211-1 is being executed in the upper small cell unit 210, and only one lower protocol processor 231-1 is being executed in the lower small cell unit 230. The first matching switch 250 distributes output from the lower protocol processor 231-1, i.e., a PHY layer 231-1, into two signals and transmits the two signals to two input ports, which are an RF_1_SISO port and an RF_1_MIMO port of the BIU 110.

In the illustrated exemplary aspect, the BIU 110 includes two types of base-station signal driving units 111-1 and 111-2, one of which does not include a demodulator but has the RF_1_SISO input port, and the other of which includes a demodulator and has the RF_1_MIMO input port. Alternatively, both of the base-station signal driving units 111-1 and 111-2 may have the same configurations and may include demodulator modules therein, but the base-station signal driving unit 111-1 may be configured not to use the included demodulator module and the base-station signal driving unit 111-2 may be configured to use the included demodulator module. In this case, a band of a signal output from the base-station signal driving unit 111-1 is represented as RF_1_SISO, and a band of a signal output from the base-station signal driving unit 111-2 is represented as RF_1_MIMO.

The common controller 213 has information about such a system configuration, and controls the first matching switch 250 according to the information so that interference among RF signals of the same frequency band can be avoided.

The two base-station signal driving units 111-1 and 111-2 of the BIU 110 each receive the distributed RF signal. The base-station signal driving unit 111-1, which receives the RF signal through the RF_1_SISO input port, outputs the received RF signal intact to the combine-divider 113. The base-station signal driving unit 111-2, which receives the RF signal through the RF_1_MIMO input port, modulates the RF signal to up or down convert a band thereof, and outputs a resulting signal to the combine-divider 113. The combine-divider 113 mixes the two RF signals and outputs a mixture of the RF signals to the ODU 130. The reason why the base-station signal driving unit 111-2 modulates the RF signal is because otherwise the mixed signal output from the combine-divider 113 cannot be separated later.

The ODU 130 converts the mixed signal into an optical RF signal and distributes the optical RF signal. The remote optical units 150-1 and 150-2 receive the distributed optical RF signal. In the illustrated exemplary aspect, the remote optical unit 150-1 has a suitable configuration capable of transmitting an RF signal of an RF_1_SISO band, which is output from the base-station signal driving unit 111-1 of the BIU 110. In addition, the remote optical unit 150-2 has a suitable configuration capable of transmitting an RF signal of an RF_1_MIMO band, which is output from the base-station signal driving unit 111-2 of the BIU 110. That is, the remote optical unit 150-1 does not include a modulation/demodulation unit, while the remote optical unit 150-2 includes a modulation/demodulation unit to convert the RF signal of the RF_1_MIMO band into an RF signal of the RF_1_SISO band.

The remote optical unit 150-1 photoelectrically converts the received optical RF signal into an electrical RF signal, then extracts an RF signal of a specified frequency band, i.e., the RF_1_SISO band, using the bandpass filter, amplifies the RF signal, and transmits the amplified signal to the antenna. The remote optical unit 150-2 photoelectrically converts the received optical RF signal into an electrical RF signal, then extracts an RF signal of another specified frequency band, i.e., the RF_1_MIMO band, using the bandpass filter, up or down converts a band of the extracted RF signal to a specified frequency band, amplifies the converted signal, and outputs a resulting signal to the antenna. Consequently, the two remote optical units 150-1 and 150-2 transmit the same data through RF signals of the same band. Since the two remote optical units 150-1 and 150-2 provide services to different floors of a building, coverage may be expanded.

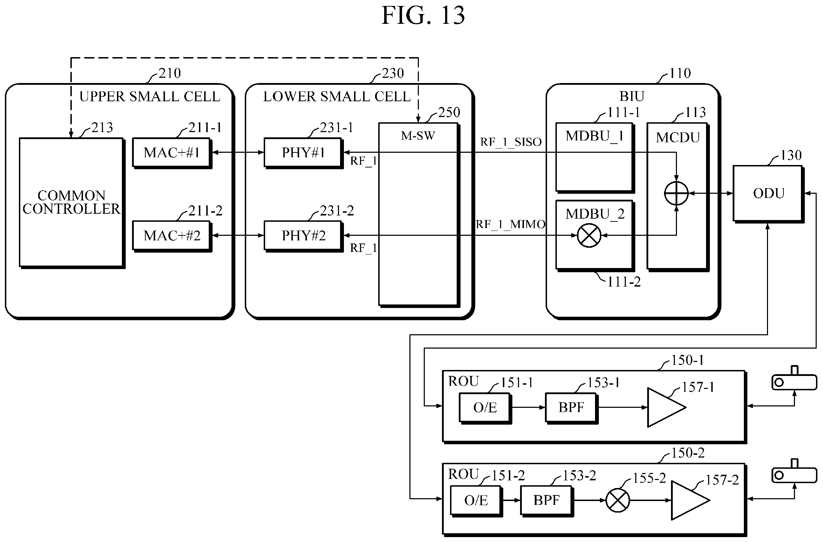

FIG. 13 is a diagram for describing a second operation mode of the cellular communication system in accordance with the exemplary aspect shown in FIG. 3. The second operation mode described herein is an example of a response that the system in accordance with the proposed invention may make when it is necessary to increase the number of users and the bandwidth/capacity in the first operation mode illustrated in FIG. 12.

According to one aspect, when it is necessary to increase bandwidth or capacity, the common controller 213 controls an operation of the first matching switch and controls whether the headend unit performs modulation. In the illustrated second operation mode, the common controller 213 generates and executes new tasks such that the common controller 213 generates and executes a new upper protocol processor 211-2 and a new lower protocol processor 231-2 and connects both of the processors. In this case, MAC+#2 processes different data as the new upper protocol processor 211-2 from data processed by MAC+#1. In the illustrated second operation mode, the new lower protocol processor 231-2 outputs a signal of the same frequency band as that of the existing lower protocol processor 231-1.

The first matching switch 250 disconnects the existing connection between the lower protocol processor PHY#1 231-1 and the RF_1_MIMO input port of the base-station signal driving unit 111-2, and connects the newly generated and executed lower protocol processor PHY#2 231-2 to the RF_1_MIMO input port of the base-station signal driving unit 111-2. The two upper protocol processors 211-1 and 211-2 and the two lower protocol processors 231-1 and 231-2 are executed, which is generally identical to the case of two small cells being executed.

The two base-station signal driving units 111-1 and 111-2 of the BIU 110 receive RF signals through two input ports. The base-station signal driving unit 111-1 outputs the received RF signal intact to the combine-divider 113. The base-station signal driving unit 111-2 modulates the received RF signal to up or down convert a band thereof, and outputs a resulting signal to the combine-divider 113. The reason why the base-station signal driving unit 111-2 modulates the RF signal is because otherwise the mixed signal output from the combine-divider 113 cannot be separated later.

The ODU 130 converts the mixed signal into an optical RF signal and distributes the optical RF signal. The remote optical units 150-1 and 150-2 receive the distributed optical RF signal. The remote optical unit 150-1 photoelectrically converts the received optical RF signal into an electrical RF signal, then extracts an RF signal of a specified frequency band, i.e., the RF_1_SISO band, using the bandpass filter, amplifies the RF signal, and transmits the amplified signal to the antenna. The remote optical unit 150-2 photoelectrically converts the received optical RF signal into an electrical RF signal, then extracts an RF signal of another specified frequency band, i.e., the RF_1_MIMO band, using the bandpass filter, up or down converts a band of the extracted RF signal to a specified frequency band, amplifies a converted signal, and outputs a resulting signal to the antenna. Consequently, since the two remote optical units 150-1 and 150-2 transmit different LTE data through RF signals of the same band, it is possible to form two mobile communication cells and to double the number of users and the bandwidth/capacity in comparison to the first operation mode illustrated in FIG. 12.

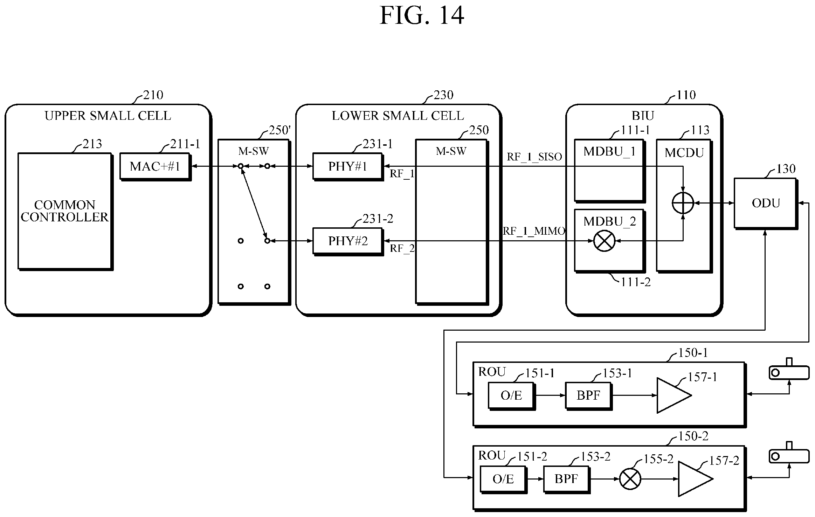

FIG. 14 is a diagram for describing a third operation mode of the cellular communication system in accordance with the exemplary aspect shown in FIG. 4 or 5. The third operation mode described herein is an example of a response that the system in accordance with the proposed invention may make when a necessity to increase bandwidth/capacity used by users arises in the first operation mode illustrated in FIG. 12.

According to one aspect, when it is necessary to increase bandwidth/capacity, the common controller 213 additionally activates the lower protocol processor, controls an operation of the first matching switch, and controls whether the lower protocol processor performs modulation. In the illustrated third operation mode, the common controller 213 generates and executes new tasks such that the common controller 213 generates and executes a new lower protocol processor 231-2. The common controller 213 controls the second matching switch 250' to connect the newly generated lower protocol processor 231-2 to the upper protocol processor 211-1.

In the illustrated third operation mode, the new lower protocol processor 231-2 outputs a signal of the same frequency band as that of the existing lower protocol processor 231-1.

The first matching switch 250 disconnects the existing connection between the lower protocol processor PHY#1 231-1 and the RF_1_MIMO input port of the base-station signal driving unit 111-2, and connects the newly generated and executed lower protocol processor PHY#2 231-2 to the RF_1_MIMO input port of the base-station signal driving unit 111-2.

The base-station signal driving units 111-1 and 111-2 of the BIU 110 receive RF signals through two input ports. The base-station signal driving unit 111-1 outputs the received RF signal intact to the combine-divider 113. The base-station signal driving unit 111-2 modulates the received RF signal to up or down convert a band thereof, and outputs a resulting signal to the combine-divider 113. The reason why the base-station signal driving unit 111-2 modulates the RF signal is because otherwise the mixed signal output from the combine-divider 113 cannot be separated later.

The ODU 130 converts the mixed signal into an optical RF signal and distributes the optical RF signal. The remote optical units 150-1 and 150-2 receive the distributed optical RF signal. The remote optical unit 150-1 photoelectrically converts the received optical RF signal into an electrical RF signal, then extracts an RF signal of a specified frequency band, i.e., the RF_1_SISO band, using the bandpass filter, amplifies the RF signal, and transmits the amplified signal to the antenna. The remote optical unit 150-2 photoelectrically converts the received optical RF signal into an electrical RF signal, then extracts an RF signal of another specified frequency band, i.e., the RF_1_MIMO band, using the bandpass filter, up or down converts a band of the extracted RF signal to a specified frequency band, amplifies the converted signal, and outputs a resulting signal to the antenna. Consequently, the bandwidths of both the remote optical units 150-1 and 150-2 can be widened more than that of the first operation mode of FIG. 12.

In the first to third operation modes shown in FIGS. 12 to 14, extending coverage is dependent on the modulation/demodulation in the base-station signal driving unit of the headend unit and the modulation/demodulation in the corresponding remote unit. However, aspects of the proposed invention are not limited to the above, that is, by controlling the wireless converters, as shown in FIGS. 6 to 8, to convert a signal into a different frequency band that is used by the same service operator, the modulation/demodulation in the headend side may not be necessary. Although such an aspect may be applied to any operation mode which has been described with reference to FIGS. 12 to 14 or will be described below, an exemplary operation in a case in which the aspect is applied to the second operation mode shown in FIG. 13 will be described herein.

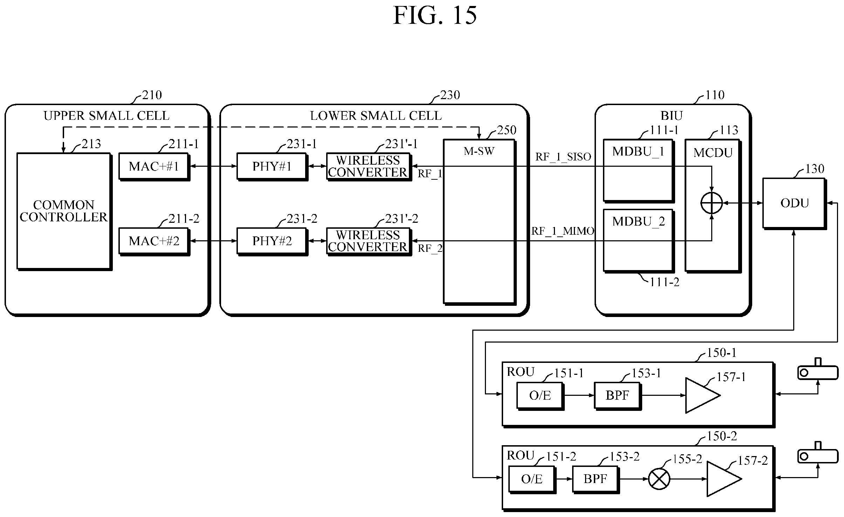

FIG. 15 is a diagram illustrating an example of another cellular communication system that implements the second operation mode described with reference to FIG. 13. The example shown in FIG. 15 is substantially the same as the exemplary aspect of FIG. 13, but the base-station signal driving unit 111-2 and the corresponding remote unit 150-2 do not need a modulation/demodulation unit. Rather, the lower protocol processors of the lower baseband unit 230 are connected with the wireless converters 231'-1 and 231'-2, respectively. As should be apparent to those skilled in the art, the respective lower protocol processors of the exemplary aspects illustrated in FIGS. 12 to 14 require wireless converters, which are simply omitted in the drawings. The difference between the above aspects and the present aspect is that modulation/demodulation frequencies of the wireless converters are controlled by the common controller 213.

Mobile communication service operators use multiple frequencies for the same service in order to support as much bandwidth and/or as many users as possible. Terminal devices search all of multiple frequencies for services of the same service operator. The common controller 213 controls modulation/demodulation frequencies of the wireless converters in order to increase the number of users and/or the bandwidth. For example, in the exemplary aspect shown in FIG. 15, the upper protocol processor 211-1 and the lower protocol processor 231-2 are additionally activated for the same service operator, and the wireless converter 231'-1 and the wireless converter 231'-2 are controlled to select two of the multiple frequencies used by the service operator and modulate/demodulate the selected frequencies. In this case, the bandpass filter 153-1 of the remote unit 150-1 is tuned to a band of the wireless converter 231'-1, and the bandpass filter 153-2 of the remote unit 150-2 is tuned to a band of the wireless converter 231'-2. As such, the coverage as well as the bandwidth and the number of users can be substantially increased for the same service operator. Although the exemplary aspect of FIG. 15 employs the configuration illustrated in FIG. 6, it should be understood by those skilled in the art that the configuration of FIG. 7 or 8 can be applied to FIG. 13 through the exemplary aspect of FIG. 15.

Similar schemes use the configurations illustrated in FIGS. 6 to 8, and may be applied to the exemplary aspect of FIG. 14.

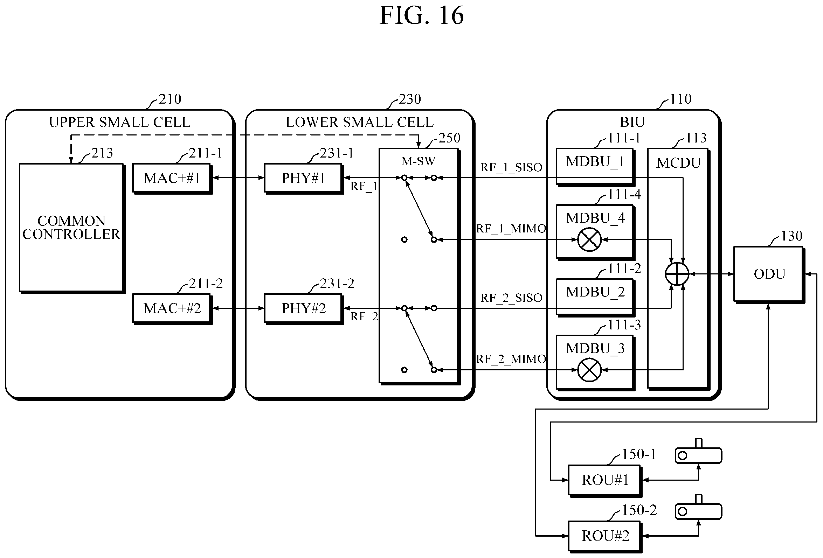

FIG. 16 is a diagram for describing a fifth operation mode of the cellular communication system in accordance with the exemplary aspect illustrated in FIG. 3 or 5. When it is necessary to increase the number of users or the throughput in the first operation mode as illustrated in FIG. 12, the fifth operation mode may be initiated. Alternatively, the fifth operation mode may be initiated in order to increase the throughput in the second operation mode illustrated in FIG. 13. In the fifth operation mode, the common controller 213 generates and executes the additional upper protocol processor 211-2 in the upper small cell unit 210, generates and executes the additional lower protocol processor 231-2 in the lower small cell unit 230, and connects the upper protocol processor 211-2 and the lower protocol processor 231-2. In the case where PHY#1 and PHY#2 are hardware circuits, the common controller 213 transmits only an output of the newly executed upper protocol processor 211-2 to PHY#2.

MAC+#1, which is the existing upper protocol processor 211-1, outputs data D1, while MAC+#2, which is the newly executed upper protocol processor 211-2, outputs data D2. PHY#1, which is the existing lower protocol processor 231-1, transmits a signal of an RF_1 band, while PHY#2, which is the newly executed lower protocol processor 231-2, outputs a signal of an RF_2 band.

The first matching switch 250 distributes each output of each lower protocol processor 231-1 and 231-2, i.e., PHY#1 and PHY#2 231-1 and 231-2, into two, and transmits the distributed output to one pair of the RF_1_SISO port and the RF_1_MIMO port and the other pair of an RF_2_SISO port and an RF_2_MIMO port, which are pairs of input ports of the BIU 110.

In the illustrated exemplary aspect, the BIU 110 includes two activated base-station signal driving units 111-1 and 111-4 that receive RF signals of the RF_1 band as an input such that one base-station signal driving unit does not include a modulator but has the RF_1_SISO input port while the other includes a modulator and has the RF_1_MIMO input port. In this case, a band of the signal output from the base-station signal driving unit 111-1 is represented as RF_1_SISO, and a band of the signal output from the base-station signal driving unit 111-4 is represented as RF_1_MIMO.

In the illustrated exemplary aspect, the BIU 110 includes two activated base-station signal driving units 111-2 and 111-3 that receive RF signals of the RF_2 band as inputs such that one base-station signal driving unit does not include a modulator but has the RF_2_SISO input port while the other includes a modulator and has the RF_2_MIMO input port. In this case, a band of the signal output the base-station signal driving unit 111-2 is represented as RF_2_SISO, and a band of the signal output from the base-station signal driving unit 111-3 is represented as RF_2_MIMO.

The common controller 213 has information about such a system configuration, and controls the first matching switch 250 according to the information so that interference among RF signals of the same frequency band can be avoided.

The two base-station signal driving units 111-1 and 111-4 of the BIU 110 each receive the distributed RF signal. The base-station signal driving unit 111-1, which receives the RF signal through the RF_1_SISO input port, outputs the received RF signal intact to the combine-divider 113. The base-station signal driving unit 111-4, which receives the RF signal through the RF_1_MIMO input port, modulates the RF signal to up or down convert a band thereof, and outputs a resulting signal to the combine-divider 113.

The two base-station signal driving unit 111-2 and 111-3 of the BIU 110 each receive the distributed RF signal. The base-station signal driving unit 111-2, which receives the RF signal through the RF_2_SISO input port, outputs the received RF signal intact to the combine-divider 113. The base-station signal driving unit 111-3, which receives the RF signal through the RF_2_MIMO input port, modulates the RF signal to up or down convert a band thereof, and outputs a resulting signal to the combine-divider 113.

The combine-divider 113 mixes the four signals and outputs a mixture of the signals to the ODU 130. The ODU 130 converts the mixed signal into an optical RF signal and distributes the optical RF signal.

The remote optical units 150-1 and 150-2 receive the distributed optical RF signal.

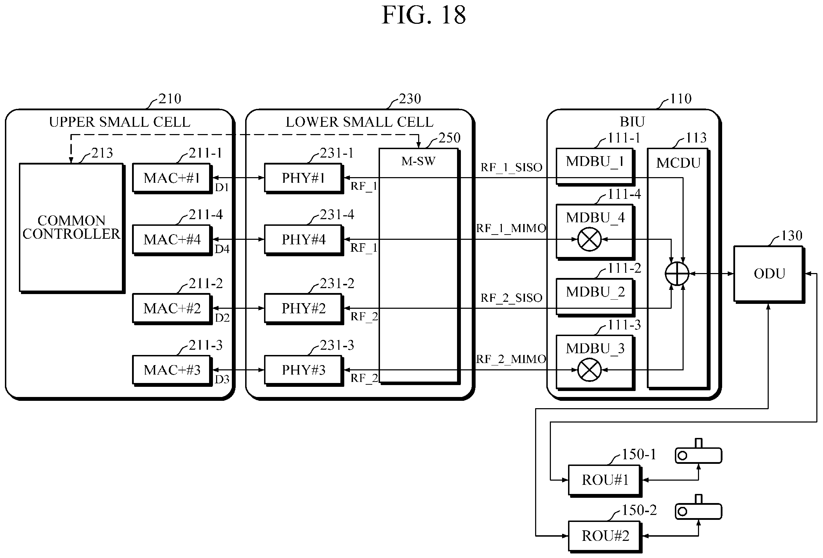

In the illustrated exemplary aspect, the remote optical unit 150-1 may be configured as the exemplary aspect of FIG. 9 and the remote optical unit 150-2 may be configured as the exemplary aspect of FIG. 10. The operations of the remote optical units 150-1 and 150-2 in accordance with the exemplary aspect of FIG. 18 will be described with reference to FIGS. 9 and 10.

Referring to FIG. 9, the remote optical unit 150-1 processes signals of two channels and has a configuration suitable to transmit RF signals of two bands, i.e., the RF_1_SISO band and the RF_2_SISO band, which are output from the base-station signal driving units 111-1 and 111-2 of the BIU 110.

An upper channel of the remote optical unit 150-1 extracts an RF signal of a specified frequency band, i.e., the RF_1_SISO band, from a photoelectrically converted RF signal output from the photoelectric conversion unit (151) through the bandpass filter 153-1, amplifies the extracted RF signal, and outputs a resulting signal to the antenna. A lower channel of the remote optical unit 150-1 extracts an RF signal of a specified frequency band, i.e., the RF_2_SISO band, from the photoelectrically converted RF signal output from the photoelectric conversion unit (151) through the bandpass filter 153-2, amplifies the extracted RF signal, and outputs a resulting signal to the antenna. The RF signal of RF_1_SISO band and the RF signal of RF_2_SISO band are mixed in a forward direction by the combine unit 159 and then transmitted to the antenna. Descriptions of an uplink will be omitted.

Referring to FIG. 10, the remote optical unit 150-2 processes signals of two channels and has a configuration suitable to transmit RF signals of two bands, i.e., the RF_1_MIMO band and the RF_2_MIMO band, which are output from the base-station signal driving units 111-3 and 111-4 of the BIU 110. More specifically, the remote optical unit 150-1 does not include a modulation/demodulation unit, whereas the remote optical unit 150-2 includes the modulation/demodulation unit 155-2, which converts the RF signal of the RF_1_MIMO band into an RF signal of the RF_1 band, and the modulation/demodulation unit 155-4, which converts the RF signal of the RF_2_MIMO band into an RF signal of the RF_2 band.

An upper channel of the remote optical unit 150-2 extracts an RF signal of another specified frequency band, i.e., the RF_1_MIMO band, from a photoelectrically converted RF signal output from the photoelectric conversion unit (151) through the bandpass filter 153-2, demodulates the extracted RF signal to a specified frequency band, i.e., the RF_1 band, through band-down conversion by the modulation/demodulation unit 155-2, amplifies the demodulated RF signal in the amplifier 157-2, and outputs a resulting signal to the antenna. A lower channel of the remote optical unit 150-2 extracts an RF signal of another frequency band, i.e., the RF_2_MIMO band, from the photoelectrically converted RF signal through the bandpass filter 153-4, demodulates the extracted RF signal to a specified frequency band, i.e., the RF_2 band, through band-down conversion by the modulation/demodulation unit 155-4, amplifies the demodulated RF signal in the amplifier 157-4, and outputs a resulting signal to the antenna. The RF signal of the RF_1_MIMO band and the RF signal of the RF_2_MIMO band are mixed in the forward direction by the combine unit 159 and then transmitted to the antenna. Descriptions of an uplink will be omitted.

As a result, both of the remote optical units 150-1 and 150-2 transmit the data D1 through the RF signal of the RF_1 band and the data D2 through the RF signal of the RF_2 band. That is, since different data D1 and D2 are transmitted using two frequency bands RF_1 and RF_2, it is the same as functions of two cells or a single cell sectorized into two sectors.

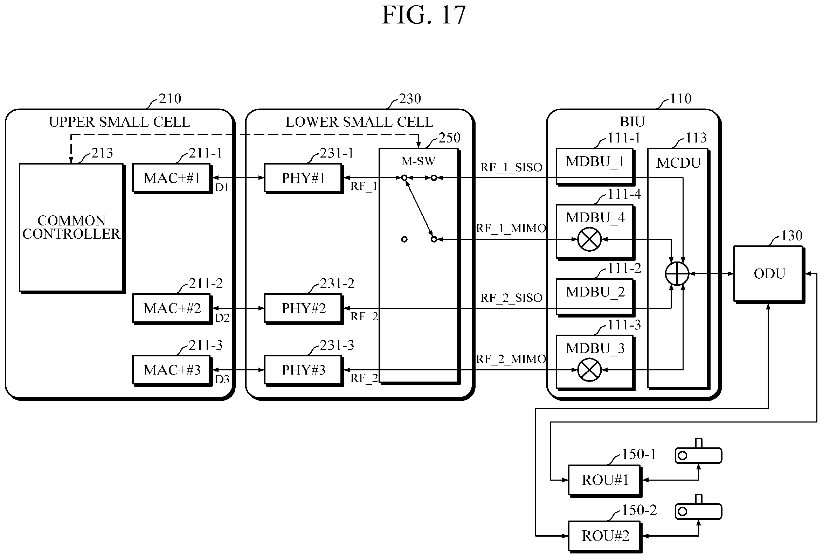

FIG. 17 is a diagram for describing a sixth operation mode of the cellular communication system in accordance with the exemplary aspect illustrated in FIG. 3 or 5. When it is necessary to additionally increase the throughput in the fifth operation mode as illustrated in FIG. 16, the sixth operation mode may be initiated. In the sixth operation mode, the common controller 213 generates and executes another additional upper protocol processor 211-3 in the upper small cell unit 210, generates and executes another additional lower protocol processor 231-3 in the lower small cell unit 230, and connects the upper protocol processor 211-3 and the lower protocol processor 231-3. In the case where PHY#1, PHY#2, and PHY#3 are hardware circuits, the common controller 213 transmits only an output of the newly executed upper protocol processor 211-3 to PHY#3.

MAC+#1 and MAC+#2, which are the existing upper protocol processors 211-1 and 211-2, output data D1 and data D2, respectively, while MAC+#3, which is the newly executed upper protocol processor 211-3, outputs data D3. PHY#1, which is the existing lower protocol processor 231-1, transmits a signal of the RF_1 band, while PHY#3, which is the newly executed lower protocol processor 231-3, outputs a signal of the RF_2 band as does the existing lower protocol processor 213-2.

In the same manner as above, the first matching switch 250 distributes an output of the lower protocol processor 231-1, i.e., PHY#1, into two signals, and transmits the distributed output to the RF_1_SISO port and the RF_1_MIMO port, which are input ports of the BIU 110. Also, the first matching switch 250 connects output of the lower protocol processor 231-2, i.e., PHY#2, with the RF_2_SISO port, which is an input port of the BIU 110. In addition, the first matching switch 250 disconnects the existing connection between the lower protocol processor 231-2, i.e., PHY#2, and the RF_2_MIMO input port of the BIU 110, and connects the newly generated and executed lower protocol processor 231-3, i.e., PHY#2 231-2, with the RF_2_MIMO input port of the BIU 110.

In the illustrated exemplary aspect, the BIU 110 includes two activated base-station signal driving units 111-1 and 111-4 that receive RF signals of the RF_1 band as an input such that one base-station signal driving unit does not include a modulator but has the RF_1_SISO input port while the other includes a modulator and has the RF_1_MIMO input port. In this case, a band of the signal output from the base-station signal driving unit 111-1 is represented as RF_1_SISO, and a band of the signal output from the base-station signal driving unit 111-4 is represented as RF_1_MIMO.

In the illustrated exemplary aspect, the BIU 110 includes two activated base-station signal driving units 111-2 and 111-3 that receive RF signals of the RF_2 band as an input such that one base-station signal driving unit does not include a modulator/demodulator but has the RF_2_SISO input port while the other includes a modulator/demodulator and has the RF_2_MIMO input port. In this case, a band of the signal output from the base-station signal driving unit 111-2 is represented as RF_2_SISO, and a band of the signal output from the base-station signal driving unit 111-3 is represented as RF_2_MIMO.

The common controller 213 has information about such a system configuration, and controls the first matching switch 250 according to the information so that interference among RF signals of the same frequency band can be avoided.

The two base-station signal driving unit 111-1 and 111-4 of the BIU 110 each receive the distributed RF signal. The base-station signal driving unit 111-1, which receives the RF signal through the RF_1_SISO input port, outputs the received RF signal intact to the combine-divider 113. The base-station signal driving unit 111-4, which receives the RF signal through the RF_1_MIMO input port, modulates the RF signal to up or down convert a band thereof, and outputs a resulting signal to the combine-divider 113.

The two base-station signal driving unit 111-2 and 111-3 of the BIU 110 receive the RF signal from PHY#2 and PHY#3, respectively. The base-station signal driving unit 111-2, which receives the RF signal through the RF_2_SISO input port, outputs the received RF signal intact to the combine-divider 113. The base-station signal driving unit 111-3, which receives the RF signal through the RF_2_MIMO input port, modulates the RF signal to up or down convert a band thereof, and outputs a resulting signal to the combine-divider 113.

The combine-divider 113 mixes the four signals and outputs a mixture of the signals to the ODU 130. The ODU 130 converts the mixed signal into an optical RF signal and distributes the optical RF signal.

In the illustrated exemplary aspect the remote optical unit 150-1 may be configured as the exemplary aspect of FIG. 9 and the remote optical unit 150-2 may be configured as the exemplary aspect of FIG. 10. The operations of the remote optical units 150-1 and 150-2 in accordance with the exemplary aspect of FIG. 18 will be described with reference to FIGS. 9 and 10.

Referring to FIG. 9, the remote optical unit 150-1 processes signals of two channels and has a suitable configuration capable of transmitting RF signals of two bands, i.e., the RF_1_SISO band and the RF_2_SISO band, which are output from the base-station signal driving units 111-1 and 111-2 of the BIU 110.

An upper channel of the remote optical unit 150-1 extracts an RF signal of a specified frequency band, i.e., the RF_1_SISO band, from a photoelectrically converted RF signal output from the photoelectric conversion unit (151) through the bandpass filter 153-1, amplifies the extracted RF signal, and outputs a resulting signal to the antenna. A lower channel of the remote optical unit 150-1 extracts an RF signal of a specified frequency band, i.e., the RF_2_SISO band, from the photoelectrically converted RF signal output from the photoelectric conversion unit (151) through the bandpass filter 153-2, amplifies the extracted RF signal, and outputs a resulting signal to the antenna. The RF signal of RF_1_SISO band and the RF signal of RF_2_SISO band are mixed in the forward direction by the combine unit 159 and then transmitted to the antenna. Descriptions of an uplink will be omitted.

Referring to FIG. 10, the remote optical unit 150-2 processes signals of two channels and has a suitable configuration capable of transmitting RF signals of two bands, i.e., the RF_1_MIMO band and the RF_2_MIMO band, which are output from the base-station signal driving units 111-3 and 111-4 of the BIU 110. More specifically, the remote optical unit 150-1 does not include a modulation/demodulation unit, whereas the remote optical unit 150-2 includes the modulation/demodulation unit 155-2, which converts the RF signal of the RF_1_MIMO band into an RF signal of the RF_1 band, and the modulation/demodulation unit 155-4, which converts the RF signal of the RF_2_MIMO band into an RF signal of the RF_2 band.

An upper channel of the remote optical unit 150-2 extracts an RF signal of another specified frequency band, i.e., the RF_1_MIMO band, from a photoelectrically converted RF signal output from the photoelectric conversion unit (151) through the bandpass filter 153-2, demodulates the extracted RF signal to a specified frequency band, i.e., the RF_1 band through band-down conversion by the modulation/demodulation unit 155-2, amplifies the demodulated RF signal in the amplifier 157-2, and outputs a resulting signal to the antenna. A lower channel of the remote optical unit 150-2 extracts an RF signal of another frequency band, i.e., the RF_2_MIMO band, from the photoelectrically converted RF signal through the bandpass filter 153-4, demodulates the extracted RF signal to a specified frequency band, i.e., the RF_2 band through band-down conversion by the modulation/demodulation unit 155-4, amplifies a demodulated RF signal in the amplifier 157-4, and outputs a resulting signal to the antenna. The RF signal of RF_1_MIMO band and the RF signal of RF_2_MIMO band are mixed in the forward direction by the combine unit 159 and then transmitted to the antenna. Descriptions of an uplink will be omitted.

As a result, the remote optical unit 150-1 transmits the data D1 through the RF signals of the RF_1 band and the data D2 through the RF signals of the RF_2 band, while the remote optical unit 150-2 transmits the data D1 through the RF signals of the RF_1 band and the data D3 through the RF signals of the RF_2 band. That is, since different data D1, D2, and D3 are transmitted using two frequency bands RF_1 and RF_2, it is the same as functions of three cells or a single cell sectorized into three sectors.

FIG. 18 is a diagram for describing a seventh operation mode of the cellular communication system in accordance with the exemplary aspect illustrated in FIG. 3 or 5. When it is necessary to additionally increase the throughput in the sixth operation mode as illustrated in FIG. 17, the seventh operation mode may be initiated. In the seventh operation mode, the common controller 213 generates and executes another additional upper protocol processor 211-4 in the upper small cell unit 210, generates and executes another additional lower protocol processor 231-4 in the lower small cell unit 230, and connects the upper protocol processor 211-4 and the lower protocol processor 231-4. In the case where PHY#1, PHY#2, PHY#3, and PHY#4 are hardware circuits, the common controller 213 transmits only an output of the newly executed upper protocol processor 211-4 to PHY#4.

MAC+#1, MAC+#2, and MAC+#3, which are the existing upper protocol processors 211-1, 211-2, and 211-3, output data D1, data D2, and data D3, respectively, while MAC+#4, which is the newly executed upper protocol processor 211-4, outputs data D4. PHY#1, which is the existing lower protocol processor 231-1, and PHY#4, which is the newly executed lower protocol processor 231-4, both transmit signals of the RF_1 band, while the remaining existing lower protocol processors 231-2 and 231-3 output signals of the RF_2 band.

The first matching switch 250 disconnects the existing connection between the lower protocol processor 231-1, i.e., PHY#1 231-1, and the RF_1_MIMO input port of the BIU 110, and connects the newly executed lower protocol processor 231-4, i.e., PHY#4 231-4, with the RF_1_MIMO input port of the BIU 110. Connections of the remaining two input ports are maintained in the same state as the sixth operation mode.

The configurations of the BIU 110 and the remote optical units 150-1 and 150-2 are similar to those in the sixth operation mode. The common controller 213 has information about such a system configuration, and controls the first matching switch 250 according to the information so that interference among RF signals of the same frequency band can be avoided.

The four base-station signal driving units 111-1, 111-2, 111-3, and 111-4 of the BIU 110 receive an RF_1_SISO RF signal, an RF_2_SISO RF signal, an RF_2_MIMO RF signal, and an RF_1_MIMO RF signal, respectively. The base-station signal driving unit 111-1, which receives the RF signal through the RF_1_SISO input port, outputs the RF signal intact to the combine-divider 113. The base-station signal driving unit 111-2, which receives the RF signal through the RF_2_SISO input port, outputs the RF signal intact to the combine-divider 113. The base-station signal driving unit 111-3, which receives the RF signal through the RF_2_MIMO input port, modulates the received RF signal to up or down convert a band thereof and outputs a resulting signal to the combine-divider 113. The base-station signal driving unit 111-4, which receives the RF signal through the RF_1_MIMO input port, modulates the RF signal to up or down convert a band thereof and outputs a resulting signal to the combine-divider 113.

The combine-divider 113 mixes the four signals and outputs a mixture of the signals to the ODU 130. The ODU 130 converts the mixed signal into an optical RF signal and distributes the optical RF signal.

In the illustrated exemplary aspect, the remote optical unit 150-1 may be configured as the exemplary aspect of FIG. 9 and the remote optical unit 150-2 may be configured as the exemplary aspect of FIG. 10. The operations of the remote optical units 150-1 and 150-2 in accordance with the exemplary aspect of FIG. 18 will be described with reference to FIGS. 9 and 10.

Referring to FIG. 9, the remote optical unit 150-1 processes signals of two channels and has a suitable configuration capable of transmitting RF signals of two bands, i.e., the RF_1_SISO band and the RF_2_SISO band, which are output from the base-station signal driving units 111-1 and 111-2 of the BIU 110.

An upper channel of the remote optical unit 150-1 extracts an RF signal of a specified frequency band, i.e., the RF_1_SISO band, from a photoelectrically converted RF signal output from the photoelectric conversion unit (151) through the bandpass filter 153-1, amplifies the extracted RF signal, and outputs a resulting signal to the antenna. A lower channel of the remote optical unit 150-1 extracts an RF signal of a specified frequency band, i.e., the RF_2_SISO band, from the photoelectrically converted RF signal output from the photoelectric conversion unit (151) through the bandpass filter 153-2, amplifies the extracted RF signal, and outputs a resulting signal to the antenna. The RF signal of the RF_1_SISO band and the RF signal of the RF_2_SISO band are mixed in the forward direction by the combine unit 159 and then transmitted to the antenna. Descriptions of an uplink will be omitted.

Referring to FIG. 10, the remote optical unit 150-2 processes signals of two channels and has a suitable configuration capable of transmitting RF signals of two bands, i.e., the RF_1_MIMO band and the RF_2_MIMO band, which are output from the base-station signal driving units 111-3 and 111-4 of the BIU 110. More specifically, the remote optical unit 150-1 does not include a modulation/demodulation unit, whereas the remote optical unit 150-2 includes the modulation/demodulation unit 155-2, which converts the RF signal of the RF_1_MIMO band into an RF signal of the RF_1 band, and the modulation/demodulation unit 155-4, which converts the RF signal of the RF_2_MIMO band into an RF signal of the RF_2 band.

An upper channel of the remote optical unit 150-2 extracts an RF signal of another specified frequency band, i.e., the RF_1_MIMO band, from a photoelectrically converted RF signal output from the photoelectric conversion unit (151) through the bandpass filter 153-2, demodulates the extracted RF signal to a specified frequency band, i.e., the RF_1 band through band-down conversion by the modulation/demodulation unit 155-2, amplifies the demodulated RF signal in the amplifier 157-2, and outputs a resulting signal to the antenna. A lower channel of the remote optical unit 150-2 extracts an RF signal of another frequency band, i.e., the RF_2_MIMO band, from the photoelectrically converted RF signal through the bandpass filter 153-4, demodulates the extracted RF signal to a specified frequency band, i.e., the RF_2 band through band-down conversion by the modulation/demodulation unit 155-4, amplifies the demodulated RF signal in the amplifier 157-4, and outputs a resulting signal to the antenna. The RF signal of RF_1_MIMO band and the RF signal of RF_2_MIMO band are mixed in the forward direction by the combine unit 159 and then transmitted to the antenna. Descriptions of an uplink will be omitted.

As a result, the remote optical unit 150-1 transmits the data D1 through the RF signals of the RF_1 band and the data D2 through the RF signals of the RF_2 band, while the remote optical unit 150-2 transmits the data D4 through the RF signals of the RF_1 band and the data D3 through the RF signals of the RF_2 band. That is, since different data D1, D2, D3, and D4 are sent out using two frequency bands RF_1 and RF_2, it is the same as functions of four cells or a single cell sectorized into four sectors.

That is, a band of the RF signal output from the first matching switch 250 of the lower small cell unit 230 matches a frequency of the bandpass filter of the RDU in the matched remote optical unit. In addition, in a case in which the band of the RF signal is converted in the base-station signal driving unit 111 of the BIU 110, the band matches the frequency of the bandpass filter of the RDU inside the matched remote optical unit.

By generalizing the aspects of the proposed invention, it is possible to flexibly increase throughput when service capacity is additionally required. In other words, by varying a passband of the bandpass filter in each remote unit, the common controller additionally activates and allocates another physical layer, or controls the base-station signal driving unit to up or down convert a band of the signal to a band of the bandpass filter of a remote unit to be connected thereto in order to increase throughput for a physical layer that uses the same frequency band, and thereby an increase in throughput is generally achieved.

According to the proposed invention, it is possible to provide an expanded cellular communication using an existing analog DAS.

A number of examples have been described above. Nevertheless, it should be understood that various modifications may be made. For example, suitable results may be achieved if the described techniques are performed in a different order and/or if components in a described system, architecture, device, or circuit are combined in a different manner and/or replaced or supplemented by other components or their equivalents. Accordingly, other implementations are within the scope of the following claims.

## Claims

1. A small cell signal source (200) for use in a cellular communication system the small cell signal source (200) comprising:
an upper small cell unit (210) comprising a plurality of upper protocol processors (211) configured to process an upper first part of a protocol stack of a small cell,
a lower small cell unit (230) comprising a plurality of lower protocol processors (231) configured to process a remaining second part of the protocol stack of the small cell,
a first matching switch (250) configured to switch on or off an output path of each of the lower protocol processors (231),
a common controller (213) configured to control activation of the plurality of upper protocol processors (211) of the upper small cell unit (210) and the plurality of lower protocol processors (231) of the lower small cell unit (230) according to a required service capacity and configured to control an operation of the first matching switch (250) and the second matching switch (250'), **characterized by**
a second matching switch (250') configured to switch on or off connections between each lower protocol processor of the lower small cell unit and each upper protocol processor of the upper small cell unit and wherein the common controller is configured to control operation of the second matching switch.

2. The small cell signal source (200) of claim 1, wherein the upper protocol processors (211) are configured to process a media access control, MAC, layer or higher in the protocol stack of the small cell and the lower protocol processors (231) are configured to process a physical, PHY, layer of the protocol stack of the small cell.

3. The small cell signal source (200) of claim 1, wherein the plurality of upper protocol processors (211) of the upper small cell unit are implemented as software tasks whose executions are controlled by the common controller (213).

4. The small cell signal source (200) of claim 1, wherein the plurality of lower protocol processors (231) of the lower small cell unit are implemented as software tasks whose executions are controlled by the common controller (213).

5. The small cell signal source (200) of claim 1, wherein the common controller is implemented by a part included in the upper small cell unit.

6. The small cell signal source (200) of claim 1, wherein the common controller (213) is configured to additionally activate the upper protocol processors (211) when an increase in the number of users is required.

7. The small cell signal source (200) of claim 1, wherein the common controller (213) is configured to additionally activate the lower protocol processor (231) when an increase in bandwidth is required, and accordingly, the common controller (213) is configured to control the operation of the first matching switch (250).

8. The small cell signal source (200) of claim 1, further comprising a plurality of wireless converters disposed between the lower protocol processors (231) and input ports of the first matching switch (250), respectively, and configured to convert an output of the lower protocol processor (231) into a radio frequency (RF) signal.

9. The small cell signal source (200) of claim 8, wherein the common controller (250) controls the plurality of wireless converters having the same service process so that different frequencies are modulated.

10. The small cell signal source (200) of claim 1, further comprising a plurality of wireless converters respectively connected to output ports of the first matching switch (250) and configured to convert an output of each of the lower protocol processors (231) into an RF signal.

11. The small cell signal source (200) of claim 10, wherein the common controller (250) controls the plurality of wireless converters having the same service process so that different frequencies are modulated.

## Patentansprüche

1. Eine Kleinzellensignalquelle (200) zur Verwendung in einem zellularen Kommunikationssystem, wobei die Kleinzellensignalquelle (200) Folgendes umfasst:
eine obere Kleinzelleneinheit (210), die eine Vielzahl von oberen Protokollprozessoren (211) umfasst, die so konfiguriert sind, dass sie einen oberen ersten Teil eines Protokollstapels einer Kleinzelle verarbeiten,
eine untere Kleinzelleneinheit (230), die eine Vielzahl von unteren Protokollprozessoren (231) umfasst, die so konfiguriert sind, dass sie einen verbleibenden zweiten Teil des Protokollstapels der Kleinzelle verarbeiten,
einen ersten Anpassungsschalter (250), der so konfiguriert ist, dass er einen Ausgabepfad jedes der unteren Protokollprozessoren (231) ein- oder ausschaltet,
eine gemeinsame Steuerung (213), die so konfiguriert ist, dass sie die Aktivierung der Vielzahl von oberen Protokollprozessoren (211) der oberen Kleinzelleneinheit (210) und der Vielzahl von unteren Protokollprozessoren (231) der unteren Kleinzelleneinheit (230) gemäß einer erforderlichen Dienstkapazität steuert, und so konfiguriert ist, dass diese einen Betrieb des ersten Anpassungsschalters (250) und des zweiten Anpassungsschalters (250') steuert, **gekennzeichnet durch**
ein zweiter Anpassungsschalter (250'), der so konfiguriert ist, dass er Verbindungen zwischen jedem unteren Protokollprozessor der unteren Kleinzelleneinheit und jedem oberen Protokollprozessor der oberen Kleinzelleneinheit ein- oder ausschaltet, und wobei die gemeinsame Steuerung so konfiguriert ist, dass sie den Betrieb des zweiten Anpassungsschalters steuert.

2. Die Kleinzellensignalquelle (200) nach Anspruch 1, wobei die oberen Protokollprozessoren (211) so konfiguriert sind, dass sie eine Medienzugriffssteuerung (MAC) oder eine höhere Schicht im Protokollstapel der Kleinzelle verarbeiten, und die unteren Protokollprozessoren (231) so konfiguriert sind, dass sie eine physikalische Schicht (PHY) im Protokollstapel der Kleinzelle verarbeiten.

3. Die Kleinzellensignalquelle (200) nach Anspruch 1, wobei die Vielzahl der oberen Protokollprozessoren (211) der oberen Kleinzelleneinheit als Software-Tasks implementiert sind, deren Ausführung durch die gemeinsame Steuerung (213) gesteuert wird.

4. Die Kleinzellensignalquelle (200) nach Anspruch 1, wobei die Vielzahl von unteren Protokollprozessoren (231) der unteren Kleinzelleneinheit als Software-Tasks implementiert sind, deren Ausführung durch die gemeinsame Steuerung (213) gesteuert wird.

5. Die Kleinzellensignalquelle (200) nach Anspruch 1, wobei die gemeinsam Steuerung durch einen in der oberen Kleinzelleneinheit enthaltenen Teil implementiert ist.

6. Die Kleinzellensignalquelle (200) nach Anspruch 1, wobei die gemeinsame Steuerung (213) so konfiguriert ist, dass sie zusätzlich die oberen Protokollprozessoren (211) aktiviert, wenn eine Erhöhung der Anzahl von Benutzern erforderlich ist.

7. Die Kleinzellensignalquelle (200) nach Anspruch 1, wobei die gemeinsame Steuerung (213) so konfiguriert ist, dass sie zusätzlich den unteren Protokollprozessor (231) aktiviert, wenn eine Erhöhung der Bandbreite erforderlich ist, und dementsprechend die gemeinsame Steuerung (213) so konfiguriert ist, dass sie den Betrieb des ersten Anpassungsschalters (250) steuert.

8. Die Kleinzellensignalquelle (200) nach Anspruch 1, die ferner eine Vielzahl von drahtlosen Wandlern umfasst, die jeweils zwischen den unteren Protokollprozessoren (231) und den Eingangsanschlüssen des ersten Anpassungsschalters (250) angeordnet sind und so konfiguriert sind, dass sie eine Ausgabe des unteren Protokollprozessors (231) in ein Hochfrequenzsignal (HF) umwandeln.

9. Die Kleinzellensignalquelle (200) nach Anspruch 8, wobei die gemeinsame Steuerung (250) die Vielzahl von drahtlosen Wandlern mit demselben Dienstprozess steuert, so dass verschiedene Frequenzen moduliert werden.

10. Die Kleinzellensignalquelle (200) nach Anspruch 1, die ferner eine Vielzahl von drahtlosen Wandlern umfasst, die jeweils mit Ausgangsanschlüssen des ersten Anpassungsschalters (250) verbunden sind und so konfiguriert sind, dass sie eine Ausgabe jedes der unteren Protokollprozessoren (231) in ein HF-Signal umwandeln.

11. Die Kleinzellensignalquelle (200) nach Anspruch 10, wobei die gemeinsame Steuerung (250) die Vielzahl von drahtlosen Wandlern mit demselben Dienstprozess steuert, so dass unterschiedliche Frequenzen moduliert werden.

## Revendications

1. Source de signal de petite cellule (200) destinée à être utilisée dans un système de communication cellulaire, la source de signal de petite cellule (200) comprenant :
une unité de petite cellule supérieure (210) comprenant une pluralité de processeurs de protocoles supérieurs (211) configurés pour traiter une première partie supérieure d'une pile de protocoles d'une petite cellule,
une unité de petite cellule inférieure (230) comprenant une pluralité de processeurs de protocoles inférieurs (231) configurés pour traiter une deuxième partie restante de la pile de protocoles de la petite cellule,
un premier commutateur d'adaptation (250) configuré pour ouvrir ou fermer un chemin de sortie de chacun des processeurs de protocoles inférieurs (231),
un dispositif de commande commun (213) configuré pour commander l'activation de la pluralité de processeurs de protocoles supérieurs (211) de l'unité de petite cellule supérieure (210) et de la pluralité de processeurs de protocoles inférieurs (231) de l'unité de petite cellule inférieure (230) selon une capacité de service requise et configuré pour commander un fonctionnement du premier commutateur d'adaptation (250) et du deuxième commutateur d'adaptation (250'), **caractérisée par**
un deuxième commutateur d'adaptation (250') configuré pour ouvrir ou fermer les connexions entre chaque processeur de protocole inférieur de l'unité de petite cellule inférieure et chaque processeur de protocole supérieur de l'unité de petite cellule supérieure et dans laquelle le dispositif de commande commun est configuré pour commander le fonctionnement du deuxième commutateur d'adaptation.

2. Source de signal de petite cellule (200) de la revendication 1, dans laquelle les processeurs de protocoles supérieurs (211) sont configurés pour traiter une couche de contrôle d'accès au support, MAC, ou une couche supérieure dans la pile de protocoles de la petite cellule et les processeurs de protocoles inférieurs (231) sont configurés pour traiter une couche physique, PHY, de la pile de protocoles de la petite cellule.

3. Source de signal de petite cellule (200) de la revendication 1, dans laquelle la pluralité de processeurs de protocoles supérieurs (211) de l'unité de petite cellule supérieure sont mis en œuvre sous forme de tâches logicielles dont les exécutions sont commandées par le dispositif de commande commun (213).

4. Source de signal de petite cellule (200) de la revendication 1, dans laquelle la pluralité de processeurs de protocoles inférieurs (231) de l'unité de petite cellule inférieure sont mis en œuvre sous forme de tâches logicielles dont les exécutions sont commandées par le dispositif de commande commun (213).

5. Source de signal de petite cellule (200) de la revendication 1, dans laquelle le dispositif de commande commun est mis en œuvre par une partie incluse dans l'unité de petite cellule supérieure.

6. Source de signal de petite cellule (200) de la revendication 1, dans laquelle le dispositif de commande commun (213) est configuré pour activer en plus les processeurs de protocoles supérieurs (211) lorsqu'une augmentation du nombre d'utilisateurs est requise.

7. Source de signal de petite cellule (200) de la revendication 1, dans laquelle le dispositif de commande commun (213) est configuré pour activer en plus le processeur de protocole inférieur (231) lorsqu'une augmentation de la bande passante est requise, et en conséquence, le dispositif de commande commun (213) est configuré pour commander le fonctionnement du premier commutateur d'adaptation (250).

8. Source de signal de petite cellule (200) de la revendication 1, comprenant en outre une pluralité de convertisseurs sans fil disposés entre les processeurs de protocoles inférieurs (231) et les ports d'entrée du premier commutateur d'adaptation (250), respectivement, et configurés pour convertir une sortie du processeur de protocole inférieur (231) en un signal de radiofréquence (RF).

9. Source de signal de petite cellule (200) de la revendication 8, dans laquelle le dispositif de commande commun (250) commande la pluralité de convertisseurs sans fil ayant le même processus de service de sorte que différentes fréquences soient modulées.

10. Source de signal de petite cellule (200) de la revendication 1, comprenant en outre une pluralité de convertisseurs sans fil respectivement connectés aux ports de sortie du premier commutateur d'adaptation (250) et configurés pour convertir une sortie de chacun des processeurs de protocoles inférieurs (231) en un signal RF.

11. Source de signal de petite cellule (200) de la revendication 10, dans laquelle le dispositif de commande commun (250) commande la pluralité de convertisseurs sans fil ayant le même processus de service de sorte que différentes fréquences soient modulées.
